# EUROPEAN PATENT SPECIFICATION

(11) **EP 2 657 107 B1**
(45) Date of publication and mention of the grant of the patent: **02.08.2017**
(21) Application number: 13177389.7
(22) Date of filing: 09.06.2008
(51) Int. Cl.: B62D 6/00, B62D 5/04, B62D 101/00, B62D 119/00

(54) **Estimation of temperature for the motor of en electric power steering**
Temperaturmessung für den Motor einer elektrischen Servolenkung
Mesure de la température d'un moteur d'une direction assistée électrique

(30) Priority: 13.06.2007 JP 2007156807
(43) Date of publication of application: 30.10.2013
(62) Divisional of application: 08765613.8
(73) Proprietor: NSK Ltd., Tokyo 141-8560 (JP)
(72) Inventor: Kumagai, Shin, Fujisawa-Shi Kanagawa, 251-8501 (JP); Kashimoto, Keiji, Maebashi-Shi Gunma, 371-8527 (JP); Aoki, Masayuki, Maebashi-Shi Gunma, 371-8527 (JP); Sekine, Takaaki, Fujisawa-Shi Kanagawa, 251-8501 (JP)
(74) Representative: Hoffmann Eitle

(56) References cited:
- EP-A1- 1 487 098
- FR-A1- 2 879 551
- JP-A- 2001 328 551

## Description

### FIELD OF THE INVENTION

The present invention relates to a controller of an electric power steering apparatus which provides a steering system of a car or vehicle with a steering assist power, and in particular, to a controller of an electric power steering apparatus in which power is self-holding and temperature estimation is continued even after power is turned off.

### BACKGROUND OF THE INVENTION

An electric power steering apparatus which provides a steering system of a car or vehicle with assist load biasing by motor torque provides steering mechanisms such as a steering shaft or a rack shaft with motor's driving force as assist load biasing through a reduction mechanism. Such a conventional power steering apparatus performs feedback control of a motor current in order to generate steering assist torque accurately. The feedback control adjusts the voltage supplied to the motor so that the difference between a current command value and a motor current detection value becomes small, and the adjustment of the the voltage applied to the motor is generally performed by the adjustment of the duty ratio of PWM (pulse width modulation) control.

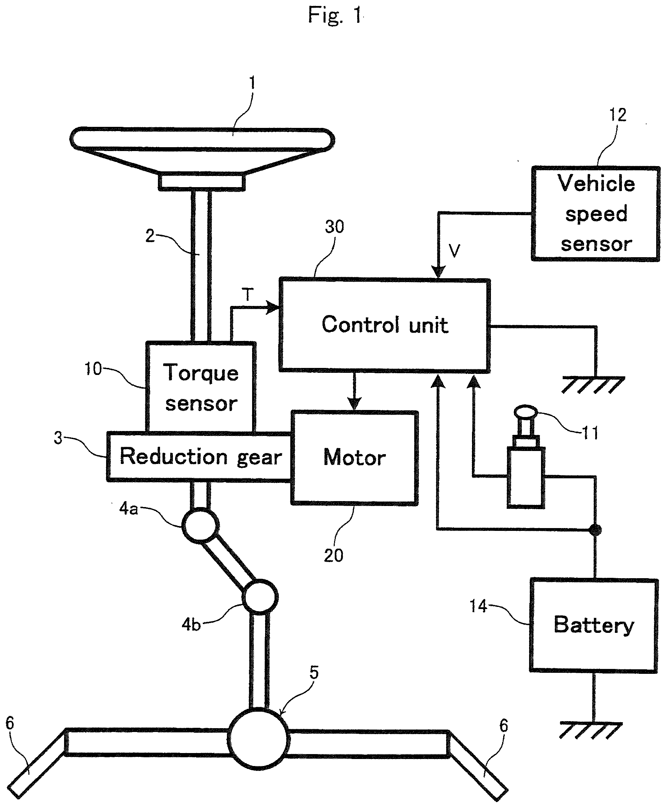

Now, a general configuration of an electric power steering apparatus will be described with reference to Fig. 1. A steering shaft 2 coupled to a steering wheel 1 is coupled to a tie rod 6 of a wheel through a reduction gear 3, universal joints 4a, 4b, and a rack- and-pinion mechanism 5. The steering shaft 2 is provided with a torque sensor 10 for detecting the steering torque of the steering wheel 1, and a motor 20 for assisting the steering force of the steering wheel 1 is coupled to the steering shaft 2 through the reduction gear 3. Electric power is supplied to a control unit 30 for controlling the electric power steering apparatus from a battery 14 through an IG switch (ignition switch) 11, and the control unit 30 calculates a steering assist command value I on the basis of a steering torque T detected by the torque sensor 10 and a vehicle speed V detected by a vehicle speed sensor 12, and controls a current to be supplied to the motor 20 on the basis of the calculated steering assist command value I.

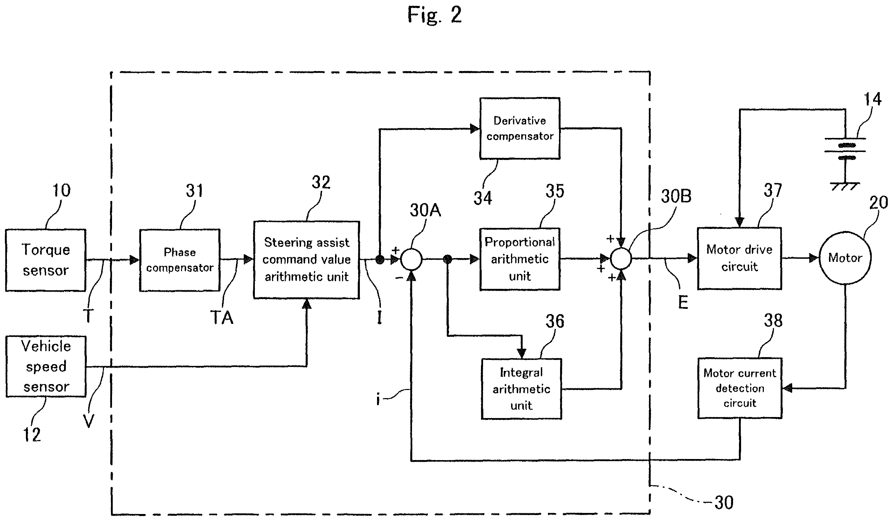

The control unit 30 mainly comprises a CPU, and general functions performed by a program within the CPU are shown in Fig. 2. For example, a phase compensator 31 does not show an independent phase compensator as hardware, but shows a phase compensating function performed by the CPU.

Now, the functions and operations of the control unit 30 will be described. The steering torque T detected and input by the torque sensor 10 is phase-compensated by the phase compensator 31 to increase the stability of the steering system. A phase-compensated steering torque TA is input to a steering assist command value arithmetic unit 32. Furthermore, the vehicle speed V detected by the vehicle speed sensor 12 is input to the steering assist command value arithmetic unit 32. The steering assist command value arithmetic unit 32 determines the steering assist command value I as a control target value of a current to be supplied to the motor 20 on the basis of the input steering torque TA and vehicle speed V. The steering assist command value I is input to a subtractor 30A and is input to a feed-forward-system derivative compensator 34 for increasing response speed. The deviation (I-i) of the subtractor 30A is input to a proportional arithmetic unit 35 and is input to an integral arithmetic unit 36 for improving the characteristics of the feedback system. The outputs of the derivative compensator 34, the proportional arithmetic unit 35, and the integral arithmetic unit 36 are added and input to an adder 30B, and a current control value E, which is the adding result at the adder 30B, is input to a motor drive circuit 37 as a motor drive signal.

The motor drive circuit 37 comprises an H-bridge circuit in which four FETs (field effect transistors) as drive elements are connected in an H-shaped manner. The current value i of the motor 20 is detected by a motor detection circuit 38, and the motor current value i is input to the subtractor 30A to be feed back.

In such an electric power steering apparatus, there is a risk of the motor 20 of overheating, smoking, and burning by excessive motor use allowing a high current to continuously pass through the motor 20 by, for example, long-time repletion of parking. In order to address such a problem, it is easily considered that the motor 20 is provided with a temperature sensor to perform overheat protection control. In an electric power steering apparatus for use in a passenger car, however, the motor 20 cannot be easily provided with a temperature sensor considering costs and layout conditions.

Hence, as shown in Japanese Patent Application Laid-Open Publication No. 10-100913, the winding temperature of a motor has been estimated, and on the basis of the temperature estimate, motor overheat protection control has been performed.

In the conventional winding temperature estimation, however, when once estimation is started and the estimation is continued, relatively stable estimation can be performed, but when suspension and resumption are repeated after the start of estimation, temperature estimation accuracy notably deteriorates.

This phenomenon will be described putting it in the actual usage. When after turning on power, normal steering performed, and power is turned off with all operations ended, planned overheat protection control can be performed by temperature estimation. However, when power is turned on, frequent steering such as parking is performed, thereby activating overheat protection control, in which power is turned off, power is turned on again, and steering such as parking is performed again, thereby activating overheat protection control, in which power is turned off again, power is turned on again, and steering is performed repeatedly, a deviation occurs between a temperature estimate and an actual motor temperature, causing malfunction of overheat protection control.

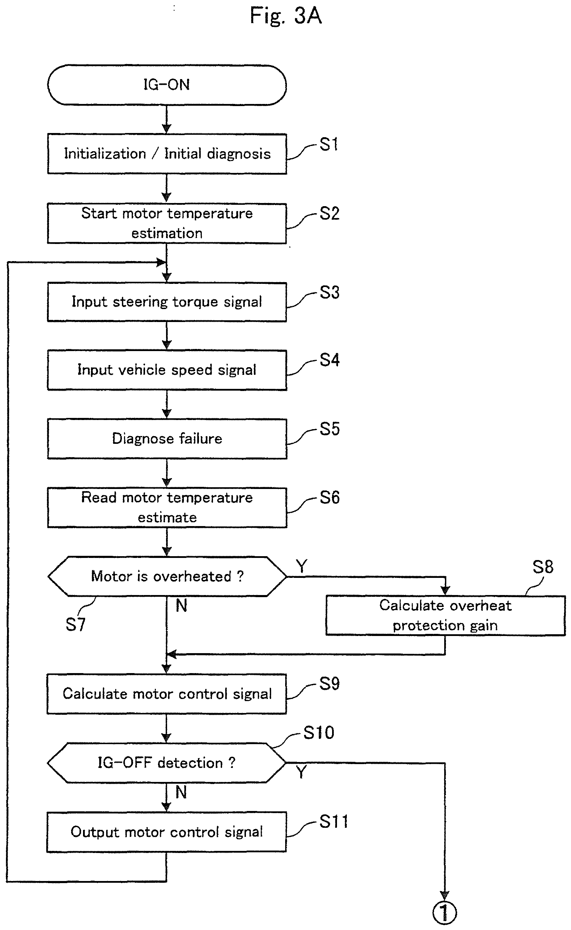

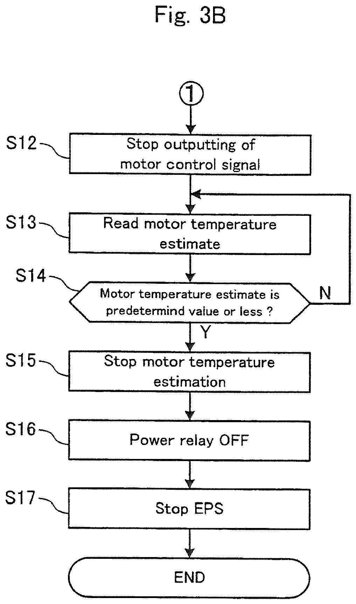

The present applicant, in order to solve the above-described problem, discloses a controller of an electric power steering apparatus which self-holds power even after power is turned off, continues temperature estimation, and continues temperature holding control in Japanese Patent Application Laid-Open Publication No. 2002-362393. Hereinafter, with reference to Fig. 3A and Fig. 3B, one example of a conventional electric power steering apparatus disclosed in the document will be described. Although the flowcharts in Fig. 3A and Fig. 3B are partially different from those disclosed in the document, they show an example of a control action for performing the invention disclosed in the document.

In the drawings, when the IG switch is turned on, first the initialization/initial diagnosis of the controller is performed, allowing a predetermined initial value as a motor temperature estimate to be set (step S1). The estimation of motor temperature is then started (step S2). A steering torque signal is input (step S3), a vehicle speed signal is input (step S4), and failure diagnosis is then performed (step S5). Next, the motor temperature estimate is read (step S6), and on the basis of the motor temperature estimate, it is determined whether or not motor overheat occurs. (step S7).

When it is determined that motor overheat is not occurring in the step S7, a motor control signal is calculated on the basis of the steering torque signal input in the step S3 and the vehicle speed signal input in the step S4 (step S9). When it is determined that motor overheats is occurring in the step S7, meanwhile, an overheat protection gain is calculated (step S8), and thereafter, in the process of the step S9, a motor control signal is calculated considering, in addition to the above-described steering torque signal and vehicle speed signal, the overheat protection gain. Each process in the above-described steps S1 to S9 is performed using any one of various known methods.

Then, the IG switch detection signal is input from an input interface of an IG switch, and ON/OFF of the IG switch is determined (step S10). When the IG switch is ON, in other words, when IG-OFF is not detected, the motor control signal calculated in the step S9 is output (step S11), and the motor is drivingly controlled on the basis of the motor control signal. The above-described processes from the step S3 to step S11 are repeated until the IG switch is turned OFF.

When OFF of the IG switch is detected in the step S10, meanwhile, the outputting of the motor control signal is stopped (step S12). The motor temperature estimate is then read (step S13), and it is determined whether or not the motor temperature estimate has decreased to a predetermined value or less (step S14). The processes of the steps S13 and S14 are repeated until the motor temperature estimate decreases to the predetermined value or less. The determination in the step S14 may be performed on the basis of whether or not a predetermined time has elapsed from the stopping of the outputting of the motor control signal.

While the processes of the above-described steps S13 to S14 are performed, the IG switch is OFF, but power is supplied to the control unit by the function of the power self-holding means. In other words, motor temperature estimation is performed without interruption owing to the power supplied by the power self-holding means.

When the motor temperature estimate has decreased to the predetermined value or less in the step S14, motor temperature estimation is stopped (step S15). The power self-holding means is then turned OFF, thereby stopping electric power supply to the control unit from the battery (step S16), and stopping the control of the electric power steering apparatus (step S17).

In the controller disclosed in Japanese Patent Application Laid-Open Publication No. 2002-362393, when the IG switch is turned OFF, steering assist control is suspended, but motor temperature estimation is continued by the power supplied by the above-described power self-holding means until the motor temperature estimate becomes a predetermined value or less or until the difference between the motor temperature estimate and a temperature measured value of a temperature sensor becomes a predetermined value or less. This eliminates malfunctioning in which overheat protection is not functioned because of a deviation between an actual motor temperature and an estimate which occurs when the IG switch is turned OFF when the motor is overheated and the IG switch is turned ON before the motor becomes cold, thereby preventing imperfect overheat protection control.

In the above-described conventional controller, however, even if the power self-holding means is activated after the IG switch is turned OFF, when the power supply from the battery decreases/stops in no time caused by external factors (such as engine cranking starting, battery deterioration, excessive battery consumption, and a break in a battery power), an arithmetic processing unit of a control unit (ECU) may stop caused by a power shortage, and numerical data on a RAM related to motor temperature estimating calculations may be deleted, thereby hindering motor temperature estimation and overheat protection control, and causing malfunction of overheat protection.

EP 1 487 098 A1 relates to a motor temperature estimator and a motor controller.

FR 2 879 551 A1 relates to an electrical steering system for vehicle, having an initial value fixation unit driving electrically erasable programmable ROM to store state of electronic control unit when an ignition switch is changed from ON to OFF state.

JP 2001 328551 A relates to an electric power steering device for vehicle.

### DISCLOSURE OF THE INVENTION

The present invention has been achieved in view of the above-described problems, and its object is to provide an electric power steering apparatus which allows overheat protection control to function sufficiently when an IG switch is turned ON again even when the temperature estimation processing of a heating part such as a motor ends imperfectly, thereby preventing the heating part from becoming an overheated state.

The above-described object of the present invention is achieved by an electric power steering apparatus according to claim 1. The above-described object is achieved effectively by allowing the heating part to be the motor.

The above-described object is achieved effectively by allowing the temperature estimation status storage means to be a temperature estimation processing completion flag storage means for storing a completion flag indicating that the temperature estimation processing has ended properly when the temperature estimate has become a predetermined value or less in the storage section when the IG switch is turned OFF and the temperature estimation processing continues by the power self-holding means, and allowing the initial value setting means, when the IG switch is turned ON again and the temperature estimation means is activated, to check the presence of absence of the temperature estimation processing completion flag, and when the temperature estimation processing completion flag is absent, to read a preset quantity of state and to set the initial value of the temperature estimate.

The above-described object is achieved effectively by allowing the control unit to be provided with a temperature sensor arranged around the perimeter of a control drive circuit, and allowing the initial value setting means to set the initial value of the temperature estimate out of a plurality of preset data on the basis of the initial detection value of the temperature sensor.

The above-described object is achieved effectively by allowing the temperature estimation status storage means to store a temperature stage to which the temperature estimate belongs in the storage section when the IG switch is turned OFF and the temperature estimation processing continues by the power self-holing means, and allowing the initial value setting means to set the initial value of the temperature estimate out of a plurality of preset data on the basis of the temperature stage when the IG switch is turned ON again and the temperature estimation means is activated.

The above-described object is achieved effectively by allowing the temperature stage storage means to store the temperature stage in the storage section until the temperature estimate becomes a predetermined value or less.

The above-described object is achieved effectively by allowing the temperature estimation status storage means to store a temperature stage to which the temperature estimate belongs in the storage section when steering assist by the motor ends and the temperature estimation processing by the power self-holding means continues, and allowing the initial value setting means to set the initial value of the temperature estimate out of a plurality of preset data on the basis of the temperature stage when the IG switch is turned ON again and the temperature estimation means is activated.

The above-described object is achieved effectively by allowing the temperature stage storage means to store the temperature stage in the storage section until the IG switch is turned OFF.

The above-described object is achieved effectively by allowing the temperature stage storage means to store the temperature stage in the storage section until the temperature stage reaches a predetermined stage.

The above-described object is achieved effectively by allowing the temperature stage storage means to store the temperature stage in the storage section when the IG switch is turned OFF and until the temperature stage reaches a predetermined stage.

The above-described object is achieved effectively by allowing the temperature stage storage means to overwrite the present temperature stage in the storage section each time the temperature stage proceeds.

The above-described object is achieved effectively by allowing the control unit to further comprise a stage writing completion flag storage means for storing a completion flag indicating that the temperature stage has been stored properly in a different area from the area for the temperature stage in the storage section, and allowing the initial value setting means, when the IG switch is turned ON again and the temperature estimation means is activated, to check the presence or absence of the stage writing completion flag, and when the stage writing completion flag is absent, to set the temperature stage to be a temperature stage with the maximum quantity of stage out of a plurality of preset temperature stages, and on the basis of the temperature stage with the maximum quantity of stage, to set the initial value of the temperature estimate.

According to the electric power steering apparatus in accordance with the present invention, when the IG switch is turned OFF and temperature estimation processing by the power self-holding means continues, before the temperature estimation means stops, predetermined data indicating the status of the temperature estimation processing, such as a completion flag indicating that the temperature estimation processing has ended properly or a temperature stage to which the temperature estimate belonged at the time of end of the previous temperature estimation processing, is stored in the storage section, and when the IG switch is then turned ON again and the temperature estimation means is activated, the initial value of the temperature estimate is set on the basis of the predetermined data stored in the storage section. This allows the preset initial state of the temperature estimation processing to be set as the initial value of the temperature estimate even when power supply from a battery suddenly decreases/stops, the temperature estimation processing cannot end properly, and numerical data on a RAM related to temperature estimation calculations has been deleted, thereby allowing safe overheat protection control to be performed.

### BRIEF DESCRIPTION OF THE DRAWINGS

Fig. 1 is a diagram showing a configuration example of a general electric power steering apparatus.
Fig. 2 is a block diagram showing a configuration example of a general control unit.
Fig. 3A is a flowchart showing a control action example of a conventional electric power steering apparatus.
Fig. 3B is a flowchart continued from Fig. 3A.
Fig. 4 is a block diagram showing a control structure of an electric power steering apparatus in accordance with a first embodiment and a second embodiment of the present invention.
Fig. 5A is a flowchart showing a control action example of an electric power steering apparatus in accordance with the first embodiment of the present invention.
Fig. 5B is a flowchart continued from Fig. 5A.
Fig. 6 is a block diagram giving a temperature estimation offset value.
Fig. 7 is a block diagram giving a quantity of state.
Fig. 8A is a flowchart showing a control action example of an electric power steering apparatus in accordance with the second embodiment of the present invention.
Fig. 8B is a flowchart continued from Fig. 8A.
Fig. 9 is a diagram illustrating the temperature stage state in the second embodiment of the present invention.
Fig. 10 is a block diagram showing the control structure of an electric power steering apparatus in accordance with a third embodiment and a fourth embodiment of the present invention.
Fig. 11A is a flowchart showing a control action example of an electric power steering apparatus in accordance with the third embodiment of the present invention.
Fig. 11B is a flowchart continued from Fig. 11A.
Fig. 12A is a flowchart showing a control action example of an electric power steering apparatus in accordance with the fourth embodiment of the present invention.
Fig. 12B is a flowchart continued from Fig. 12A.

### DETAILED DESCRIPTION OF THE PREFERRED EMBODIMENTS

### [First embodiment]

Hereinafter, embodiments of the present invention will be described with reference to the drawings.

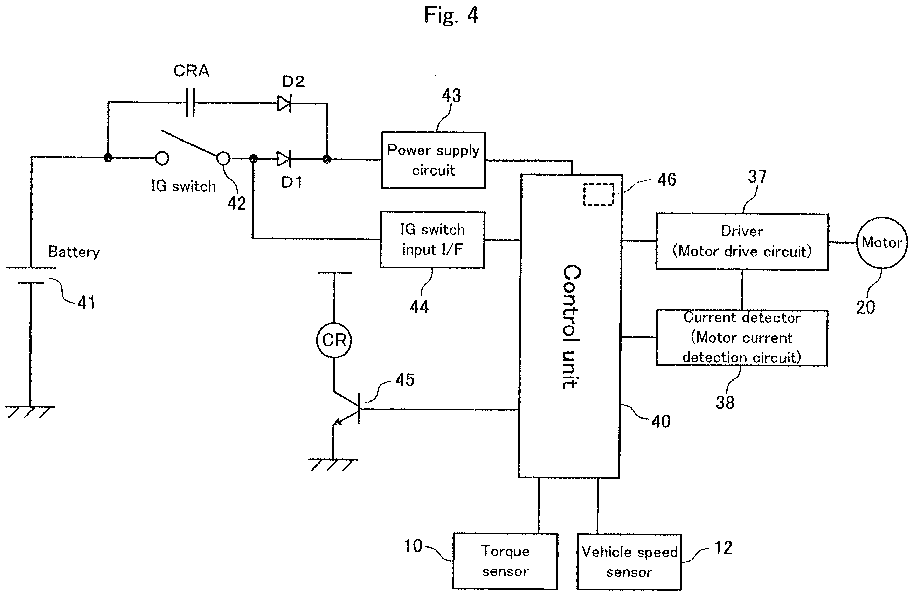

Fig. 4 is a block diagram showing a control structure of an electric power steering apparatus in accordance with a first embodiment and a second embodiment of the present invention. In the embodiments which will be described hereinafter, the common components with the above-described conventional example will be provided with the same reference numerals, and their description will be omitted.

In Fig. 4, power is supplied to a control unit (ECU) 40 comprising a CPU or the like, which performs overall control, from a battery 41 through an IG switch 42, a diode D1, and a power supply circuit (stabilizing circuit) 43. Power is supplied from the battery 41 through a relay contact CRA, a diode D2, and the power supply circuit (stabilizing circuit) 43. Driving of a motor 20 is, as is the case with the above-described known technique, controlled by the control unit 40 on the basis of a steering torque signal detected by a torque sensor 10 and a vehicle speed signal detected by a vehicle speed sensor 12. To the control unit 40, an ON/OFF signal of the 1G switch 42 is input through an IG switch input interface 44, and a relay CR is connected through a transistor 45 as a drive means. The relay CR is driven by the control unit 40 through the transistor 45, and in accordance with its drive/break, the contact CRA of the relay CR is turned ON/OFF. Within the control unit 40, for example, in the vicinity of an FET as a heating component, a temperature sensor 46 is installed.

In the electric power steering apparatus having such a control structure, a power self-holding means is constituted by the relay CR, its contact CRA, and the transistor 45, allowing it to control own power off after power is once turned on. The control unit 40 is provided with a temperature estimation means using the above-describe known technique for estimating the temperature of the motor 20.

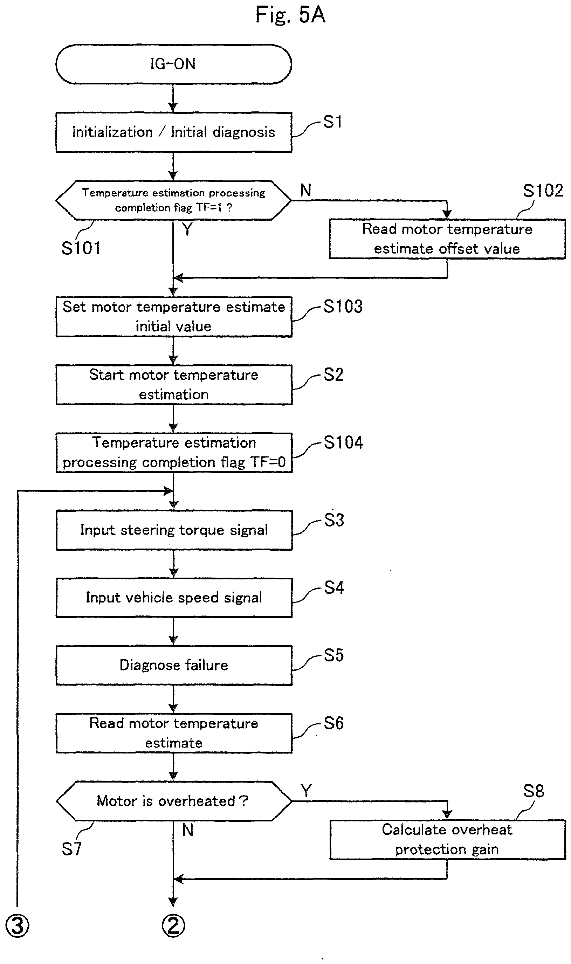

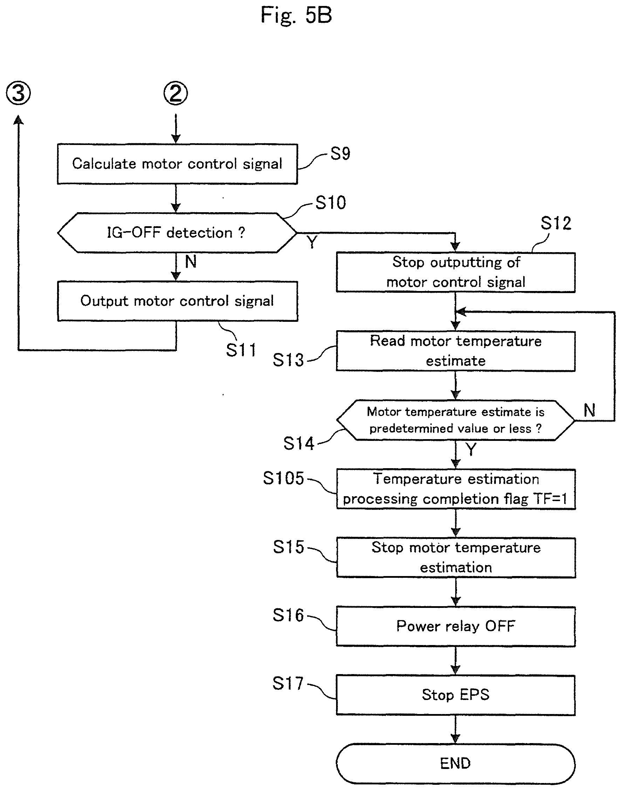

Next, a control action example of an electric power steering apparatus in accordance with the first embodiment of the present invention will be described with reference to the flowchart of FIG. 5A and Fig. 5B. In the figures, the same steps (routines) with the above-described Fig. 3A and Fig. 3B will be provided with the same step numbers with their description omitted, and only different parts will be mainly described hereinafter.

In the control of the first embodiment, as processing at IG-OFF, when it is determined that a motor temperature estimate which has been read in the step S13 has decreased to a predetermined value or less in the step S14, a temperature estimation processing completion flag TF of 1 is stored in a storage section (an EEPROM or the like) provided within the control unit 40 (step S105), and the motor temperature estimation is stopped (step S15).

When the IG switch 42 is turned ON, the initialization/initial diagnosis of the controller is performed (step S1), then it is determined whether or not the temperature estimation processing completion flag TF is 1 (step S101). When TF=1 in the step S101, it means that temperature estimation was stopped after it was determined that the motor temperature estimate had decreased to the predetermined value or less in the step S14 in the previous control processing. In this case, since data for use in the temperature estimation for a normal case (when the previous control processing ended properly) is reliable, the motor temperature estimate for the normal case is set as the initial value of the motor temperature estimate (step S103).

When TF=0 in the step S101, meanwhile, it means that the temperature estimation was stopped before the motor temperature estimate had decreased to the predetermined value or less for some reasons in the previous control processing. In this case, since there is a possibility that data for use in temperature estimation has been deleted, motor overheat protection may not function properly. A motor temperature estimation offset value, which is preset in accordance with an initial value of the temperature sensor 46 installed within the control unit 40, is then read (step S102). In the process of the step S103, then, a value obtained by adding this motor temperature estimation offset value to the motor temperature estimate which is set when TF=1 is set as the initial value of the motor temperature estimate. This allows the initial value of the motor temperature estimate when TF=0 to be set higher than that when TF=1.

The motor temperature estimation offset value read in the process of the step S102 may be a motor temperature estimation gain which is preset in accordance with the initial detection value of the temperature sensor 46. When using the motor temperature estimation gain, in the process of the step S103, a value obtained by multiplying the motor temperature estimate which is set when TF=1 by this motor temperature estimation gain is set as the initial value of the motor temperature estimate.

In the process of the step S102, an initial value of each state variable for temperature estimation processing which is preset in accordance with the initial value of the temperature sensor 46 may be read instead of the motor temperature estimate. When using the initial value of each state variable, in the process of the step S103, the read initial value of each state variable is set as the initial value of the motor temperature estimate.

As described above, on the basis of the initial value of the motor temperature estimation set in the step S103, motor temperature estimation is started (step S2), and a temperature estimation processing completion flag TF of 0 is stored in the storage section within the control unit 40 in preparation for the next stopping of the control processing (step S104).

As described above, in the electric power steering apparatus in accordance with the first embodiment, even after the IG switch 42 is tuned OFF, the temperature estimation processing by the temperature estimation means is continued owing to power supplied from the power self-holding means, and a completion flag indicating that the temperature estimation processing for the motor 20 has ended properly is stored in the storage section of the control unit 40 before the temperature estimation means stops. When the IG switch 42 is then turned ON again and the temperature estimation means is activated, the presence or absence of the completion flag is checked, and when the completion flag is not stored in the storage section, a temperature estimation offset value for the motor 20 is read out of a plurality of preset data on the basis of the initial detection value of the temperature sensor 46 installed in the control unit 40, and is added to the initial value of the temperature estimation processing. This allows the preset motor temperature estimation offset value to be added to the initial value of the temperature estimation processing even when power supply from the battery 41 suddenly decreases/stops, the temperature estimation processing cannot end properly, and numerical data in the storage section related to the temperature estimation calculations for the motor 20 is deleted, allowing safe overheat protection control to be performed.

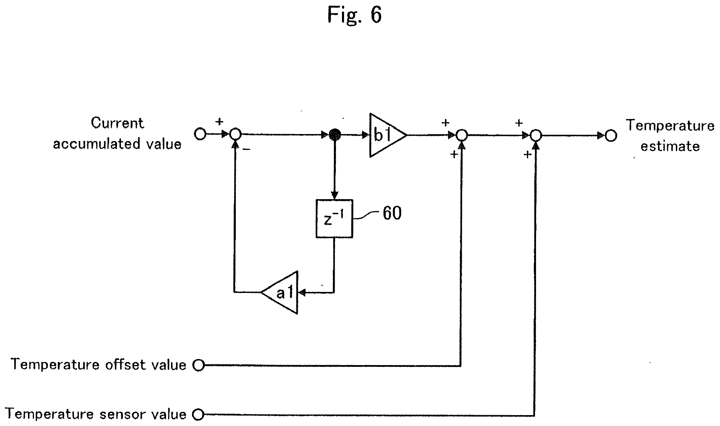

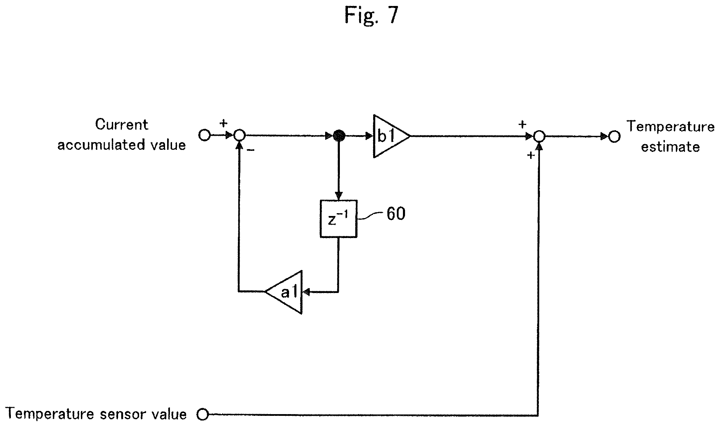

High-order filters or a few filters may be required in order to perform high-precision temperature estimation, since a quantity of state (an internal calculated value) of each filter is necessary to be set in this case. Fig. 6 is a block diagram for giving a temperature offset value initially, and Fig. 7 is a block diagram for giving a quantity of state initially. The structure of a temperature estimation section shown in these figures is, in order to simplify description, configured by a first-order filter, and the quantity of state of the part with the reference numeral of 60 is set initially as the quantity of state for temperature estimation processing.

### [Second embodiment]

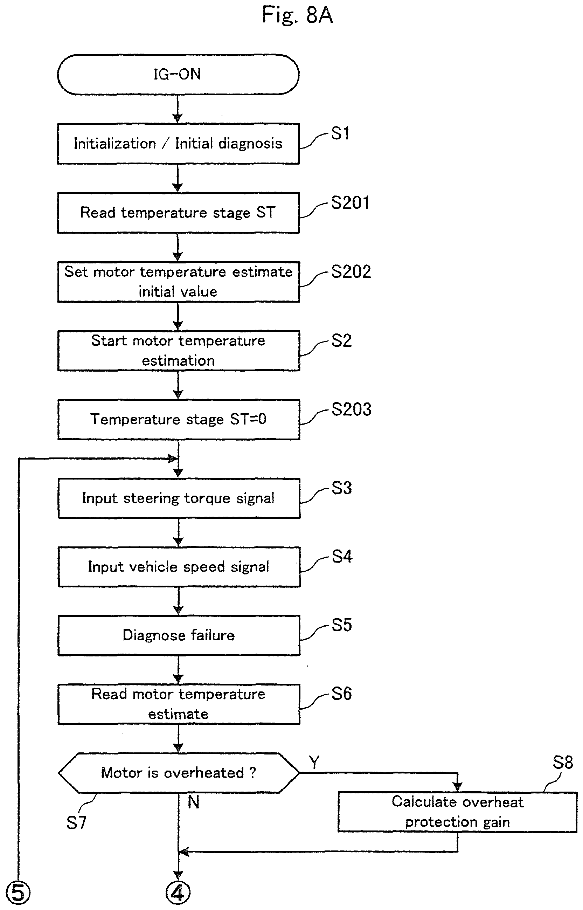

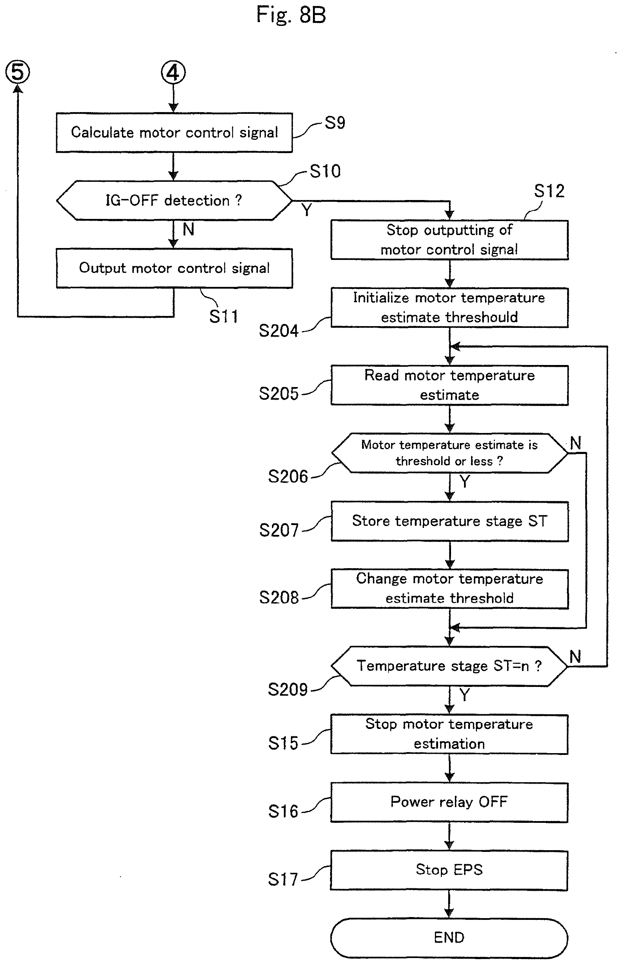

Next, a control action example of an electric power steering apparatus in accordance with a second embodiment of the present invention will be described with reference to the flowchart of Fig.8A and Fig. 8B. In the drawings, the same steps (routines) with the flowcharts of Fig. 3A and Fig. 3B, and Fig. 5A and Fig. 5B are provided with the same step numbers with their description omitted, and only different parts will be mainly described hereinafter.

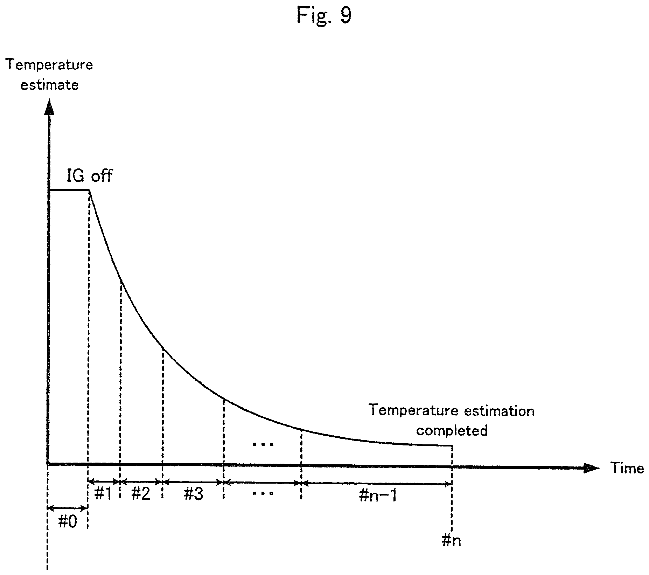

In the control of the second embodiment, as processing at IG-OFF, before motor temperature estimation is stopped in the step S15, a temperature stage ST to which a temperature estimate belongs at that time is stored in the storage section of provided within the control unit 40 (step S207). The temperature stage ST is, as shown in Fig. 9, divided into a plurality of stages on the basis of temperature (temperature estimate). The temperature stage ST divided on the basis of temperature will be described here, but it may be divided into a plurality of stages, for example, on the basis of elapsed time from IG-OFF. Since the motor temperature after IG-OFF decreases exponentially, time interval for each temperature stage is set to be shorter in a part in which a temperature change is large and, on the contrary, is set to be longer in a part in which a temperature change is slow. Data on the quantity of state of temperature estimation processing corresponding to each temperature stage ST is mapped and stored in the storage section of the control unit 40 in advance. In the step S207, the present temperature stage ST is determined on the basis of the temperature estimate at that time, and its stage number is stored in the storage section as a temperature stage ST.

When the IG switch 42 is then turned ON, the initialization/initial diagnosis of the controller is performed (step S1). Next, the temperature stage ST at the previous control processing is read (step S201), and on the basis of the temperature stage ST, the initial value of the motor temperature estimate is set (step S202). When ST=n, it means that temperature estimation was stopped before it was determined that the motor temperature estimate had decreased to the predetermined value or less in the step S14. In this case, since data for use in the temperature estimation for a normal case (when the previous control processing ended properly) is reliable, the motor temperature estimate for the normal case is set as the initial value of the motor temperature estimate (step S202).

When the temperature stage ST read in the step S201 is 0, meanwhile, it means that motor control aborted for some reason (for example, due to momentary power stop). In this case, since there is a possibility that data for use in temperature estimation has been deleted and that the motor 20 is at high temperature because of control processing which had been performed immediately before this-time starting, the state of the maximum temperature is set to be the initial value of the motor temperature estimate in the process of the step S202.

The temperature stage ST read in the step S201 is not n and is not 0, it means that temperature estimation was stopped before the motor temperature estimate had decreased to the predetermined value or less for some reason in the previous control processing. In this case, there is a possibility that data for use in temperature estimation has been deleted, motor overheat protection may not function properly. In the process of the step S202, therefore, a motor temperature estimation offset value is read out of a plurality of preset data on the basis of the temperature stage ST, and is added to the initial value of the temperature estimation processing.

As described above, motor temperature estimation is started on the basis of the initial value of the motor temperature estimate set in the step S202 (step S2), and a temperature stage ST of 0 is stored in the storage section within the control unit 40 in preparation for the next stopping of the control processing (step S203). The motor drive control in the steps S3 to S11 is then performed as is the case with the above-described control action example.

When IG-OFF is detected in the step S10, the outputting of the motor control signal is stopped (step S12), and a motor temperature estimate threshold is initialized (step S204). A threshold at which the temperature stage ST changes from 0 to 1 is set to be the initial threshold of the motor temperature estimate.

The motor temperature estimate is then read (step S205), and it is determined whether or not the motor temperature estimate is the threshold or less (step S206). When the motor temperature estimate has decreased to the threshold or less as a result of this determination, it means that the temperature stage ST has changed. The temperature stage ST at that time is then stored (step S207), and the motor temperature estimate threshold is changed to a threshold at which the temperature stage ST is changed to the next one, that is, a threshold at which ST is changed from 1 to 2 (step S208).

When the motor temperature estimate has not decreased to the threshold or less as a result of the determination in the step S206, meanwhile, since the temperature stage ST remains to be the presently-stored one, the processes of the step S207 and S208 are not performed.

It is determined that whether or not the present temperature stage ST is n (step S209). When the temperature stage ST is not n as a result of this determination, it means that the motor 20 has not yet become cold thoroughly, and the process then returns to the step S205, allowing the present temperature stage ST to be updated and stored at all times.

When the temperature stage ST is n as a result of the determination in the step S209, meanwhile, it means that the motor 20 has become cold thoroughly. The motor temperature estimation is hence stopped (step S15), the relay CR of the power self-holding means is turned OFF through the transistor 45 to stop power supply to the control unit 40 from the battery 41 (step S16), and the control of the electric power steering apparatus is stopped (step S17).

As described above, in the electric power steering apparatus in accordance with the second embodiment, after the IG switch 42 is turned OFF and until the temperature estimation processing of the temperature estimation means ends by the power self-holding means, at least one temperature stage state to which the estimate of the temperature estimation means belonged is stored in the storage section of the control unit 40, and then, when the IG switch 42 is turned ON again and the temperature estimation means is activated, a motor temperature estimation offset value is read out of a plurality of preset data on the basis of the temperature stage state, and is added to the initial value of the temperature estimation processing. This achieves the same effect as the first embodiment, and in addition, data stored in the storage section is a temperature stage state, thereby reducing storage capacity and increasing processing capacity in temperature estimation.

In the control of the second embodiment, while the drive control of a motor 20 is performed, a temperature stage when the temperature estimate is maximized (ST=0) is stored in the storage section within the control unit 40. For example, when abnormal event such as the momentary decrease/stop of the voltage of the battery 20 occurs, the CPU of the control unit 40 is reset, and when the voltage of the battery 41 is restored thereafter, the CPU determines that IG is ON and resumes the control processing flow from the initialization/initial diagnosis, wherein the motor temperature estimation initial value is set to be the maximum value, which is on the safety side, thereby performing safe, sure overheat protection of the motor 20.

In the control of the second embodiment, in addition, in the duration from IG-OFF to the stopping of motor temperature estimation, in other words, while the temperature of the motor 20 is decreasing, the present temperature stage is overwritten each time the temperature stage ST proceeds, and the motor temperature estimation initial value at IG-ON is set in accordance with the temperature stage ST in which the motor temperature estimate is stored. This can perform the overheat protection of the motor 20 without setting the motor temperature estimation initial value to be on the safety side overly.

Although in the above-described description of the second embodiment a temperature estimation offset value is given, the initial value of each quantity of state of the temperature estimation processing may be set. In some cases, higher-order filters or a few filters may be required to perform high-precision temperature estimation. In this case, a quantity of state (an initial calculated value) of each filter is required to be set.

As another embodiment, a quantity of state of the temperature estimation processing, instead of the temperature stage state, may be stored, and similar processing may be performed.

### [Third embodiment]

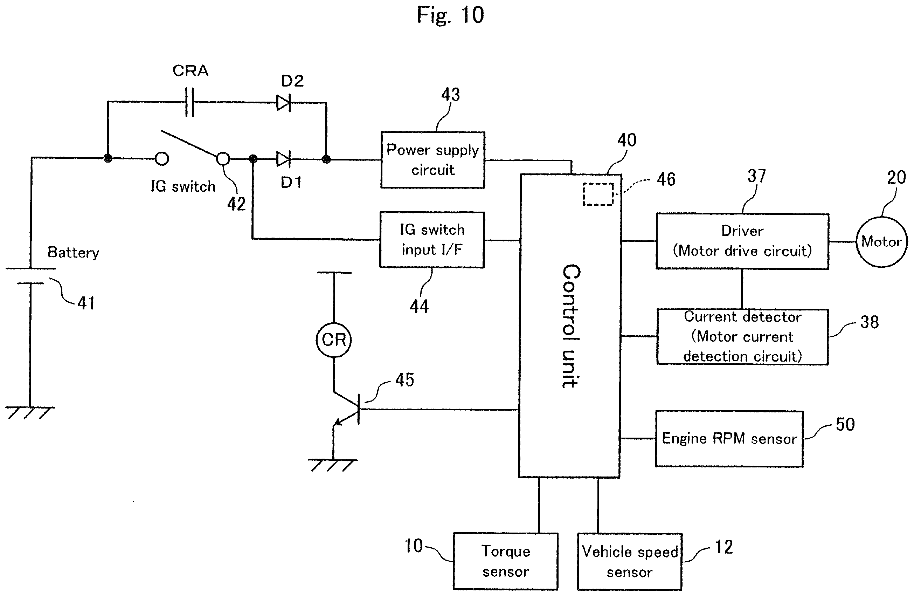

Fig. 10 is a block diagram showing the control structure of an electric power steering apparatus in accordance with a third embodiment and a fourth embodiment of the present invention. In the embodiment of the present invention which will be described hereinafter, the common components with the above-described conventional example and the first and second embodiments will be provided with the same reference numerals with their description omitted, and only different parts will be mainly described hereinafter.

As shown in Fig. 10, the control structure of the electric power steering apparatus in accordance with the third and fourth embodiments is different from the above-described first and second embodiments in that a detection signal from an engine revolutions per minute (RPM) sensor 50 for detecting the engine RPM of a vehicle in which this apparatus is installed is input to the control unit 40. The engine RPM sensor 50 is installed in an engine of a general vehicle, and is electrically connected to the control unit 40 when it is installed in a vehicle.

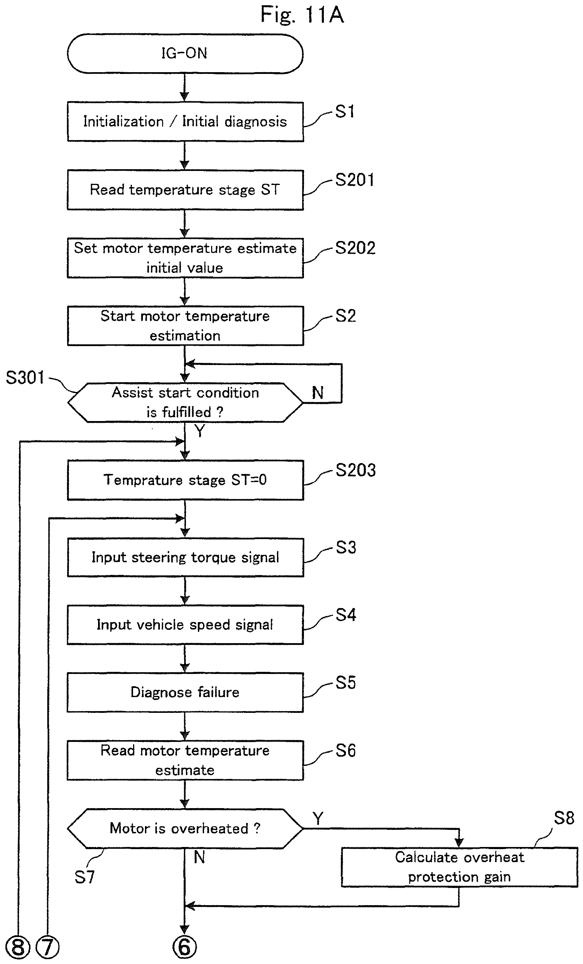

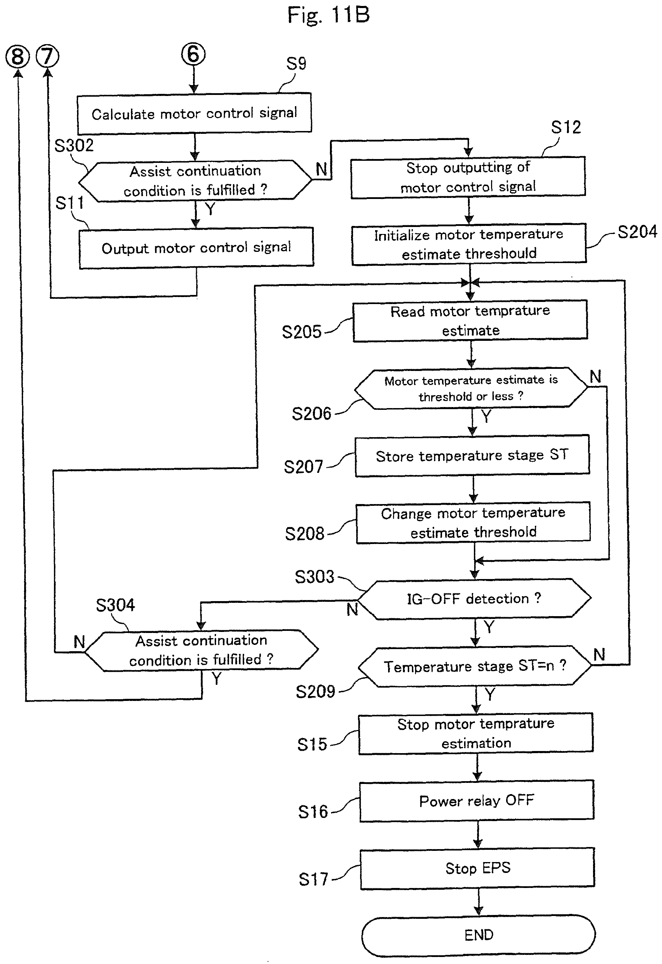

Next, a control action example of an electric power steering apparatus in accordance with the third embodiment of the present invention will be described with reference to the flowchart of Fig. 11A and Fig. 11B. In the figures, the same steps (routines) with the above-described Fig. 3A and Fig. 3B, Fig. 5A and Fig. 5B, and Fig. 8A and Fig. 8B will be provided with the same step numbers with their description omitted, and only different parts will be mainly described hereinafter.

In the control of the third embodiment, when the IG switch 42 is turned ON, first the initialization/initial diagnosis of the controller is performed (step S1). The temperature stage ST stored in the storage section within the control unit 40 is then read (step S201). The initial value of the motor temperature estimate is set (step S202) in accordance with the read temperature stage ST, and motor temperature estimation is started on the basis of the initial value (step S2).

Next, it is determined whether or not an assist (steering assist) start condition for performing steering assist by the motor 20 is fulfilled (step S301). Here, when IG is ON, and the engine RPM detected by the engine RPM sensor 50 is a prescribed value or more, it is determined that the assist start condition is fulfilled. The prescribed value of engine RPM is set to be below an engine RPM at idling (for example, 300 rpm or less). Until this assist start condition is fulfilled, the control of the motor 20 is not performed because of being on standby.

When it is determined that the assist start condition is fulfilled in the step S301, the temperature stage ST is set to be 0, which is on the safety side, (step S203), and the motor drive control in the steps S3 to S11 is then performed as is the case with the above-described control action example. Although in the above-described control action example, the IG-ON/OFF is determined in the step S10, in the control of this third embodiment, it is determined whether or not an assist continuation condition is fulfilled (step S302). As is the case with fulfillment determination of the assist start condition in the step S301, when IG is ON, and the engine RPM detected by the engine RPM sensor 50 is a prescribed value or more, it is determined that the assist continuation condition is fulfilled. In other words, in addition to at IG-OFF, when the engine RPM becomes the prescribed value or less caused by engine stalling or the like, too, the control of the motor 20 is stopped, and a state in which the motor temperature is decreasing is stored.

In the step S302, when it is determined that the assist continuation condition is not fulfilled, the outputting of the motor control signal is stopped (step S12), and the motor temperature estimate threshold is initialized (step S204). Here, as is the case with the control action example of the above-described second embodiment (Fig. 8A and Fig. 8B), a threshold at which the temperature stage ST is changed from 0 to 1 is set to be the initial threshold of the motor temperature estimate, and processing for updating and storing the present temperature stage ST is performed in the steps S205 to S208.

An IG switch detection signal is then input from the input interface 44 of the IG switch 42, and the ON/OFF of the IG switch 42 is determined (step S303). When the result of the this determination is IG-ON, it means that it has been determined that the engine RPM is the prescribed or less in the step S302 or that it has been determined that the IG switch 42 is OFF in the step S302, but thereafter, the IG switch 42 was turned ON by an operator before the motor 20 has become cold thoroughly. When the result of determination in the step S303 is IG-ON, hence, it is determined again that the assist continuation condition is fulfilled (step S304). The determination condition here is the same as the above-described processes of the steps S301 and S302.

When the assist continuation condition is fulfilled as a result of the determination in the step S304, it means that the motor temperature estimation after the step S2 is continued and that the present motor temperature estimate is highly reliable data. In this case, therefore, no correction is made to the temperature estimate, the process is returned to the step S203 to set the temperature stage ST to be 0, and the normal motor control in the steps S3 to S11 is performed.

When the assist continuation condition is not fulfilled as a result of the determination in the step S304, meanwhile, it means that the engine RPM has decreased to the prescribed value or less. In this case, therefore, the process returns to the step S205, allowing the present temperature stage ST to be updated and stored at all times.

When it has been determined that IG is OFF in the step S303, it is further determined whether or not that the present temperature stage ST is n (step S209). When the temperature stage ST is not n as a result of this determination, it means that the motor 20 has not yet become cold thoroughly, and the process then returns to the step S205, allowing the present temperature stage ST to be updated and stored at all times.

When the temperature stage ST is n as a result of the determination in the step S209, meanwhile, it means that the motor 20 has become cold thoroughly. The motor temperature estimation is hence stopped (step S15), the relay CR of the power self-holding means is turned OFF through the transistor 45 to stop power supply to the control unit 40 from the battery 41 (step S16), and the control of the electric power steering apparatus is stopped (step S17).

As described above, in the electric power steering apparatus in accordance with the third embodiment, when compared to the above-described second embodiment, the determination of the assist fulfillment condition is added. This achieves the same effect as the above-described first embodiment and the second embodiment, and in addition, overheat protection can be performed properly even when an abnormal event occurs such as momentary decrease/stop of battery voltage by cranking by engine restarting with IG-ON at the time of engine stalling of a manual transmission vehicle (MT vehicle).

In the control of the third embodiment, in the duration from the failure of the assist continuation condition to the stopping of motor temperature estimation, the present temperature stage is overwritten each time the temperature stage ST proceeds, and the motor temperature estimation initial value at IG-ON is set in accordance with the temperature stage ST in which the motor temperature estimate is stored. This can perform the overheat protection of the motor 20 without setting the motor temperature estimation initial value to be on the safety side overly.

### [Fourth embodiment]

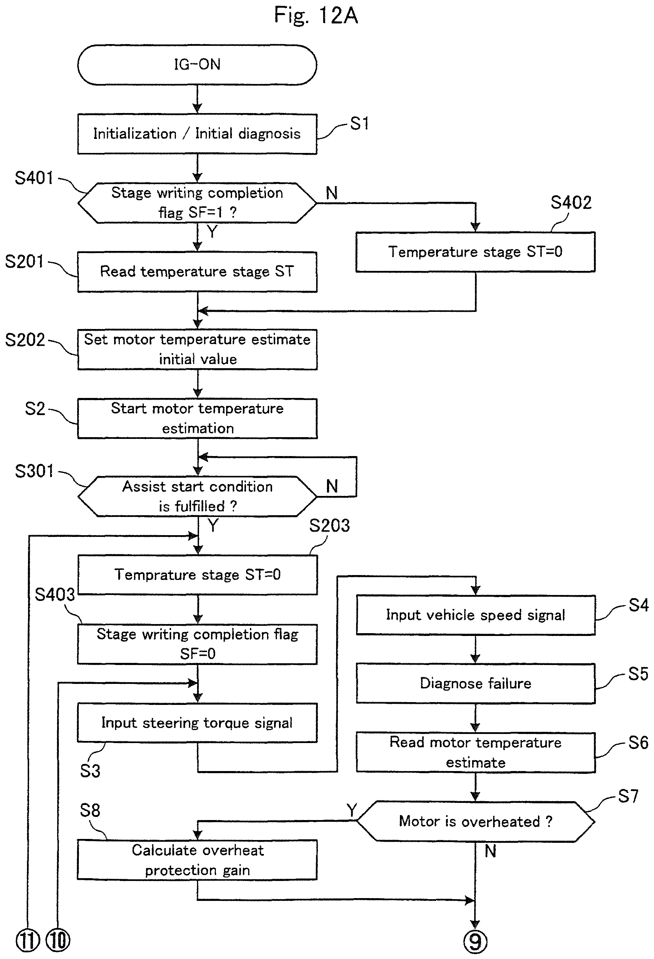

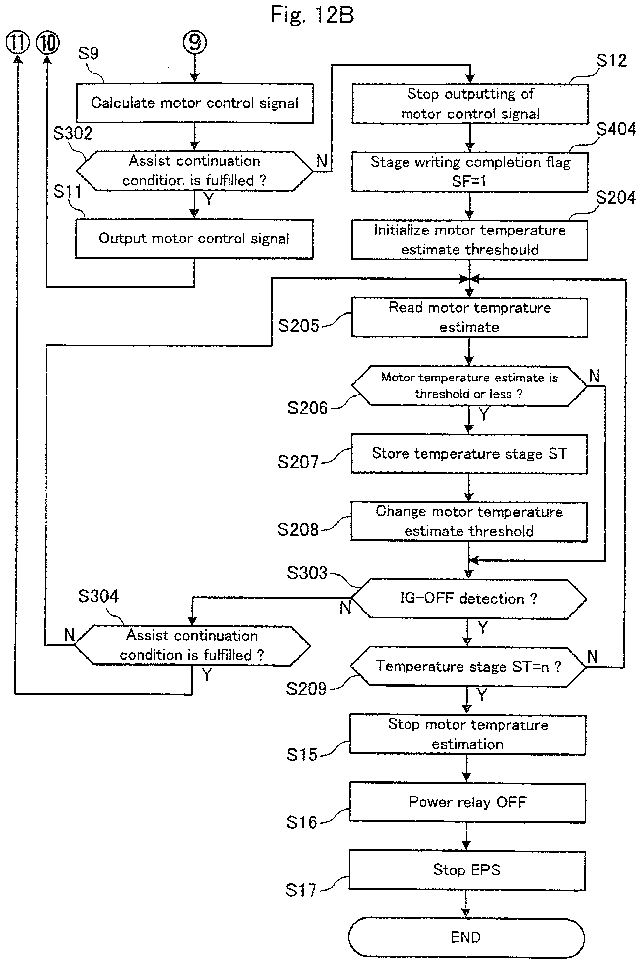

Next, a control action example of an electric power steering apparatus in accordance with a fourth embodiment of the present invention will be described with reference to the flowchart of Fig. 12A and Fig. 12B. In the drawings, the same steps (routines) with the above-described Fig. 3A and Fig. 3B, Fig. 5A and Fig. 5B, Fig. 8A and Fig. 8B, and Fig. 11A and Fig. 11B will be provided with the same step numbers with their description omitted, and only different parts will be mainly described hereinafter.

In the control of the fourth embodiment, when the assist continuation condition is not fulfilled in the step S302, the outputting of the motor control signal is stopped (step S12), and a temperature stage ST writing completion flag SF=1 is stored in a different area from the area for the temperature stage ST in the storage section within the control unit 40 (step S404). This writing completion flag SF=1 means that in the previous control processing the control of the motor 20 was stopped properly, that as a temperature stage ST at least ST=0 is stored, and that the present temperature stage had been overwritten with each proceeding of the temperature stage ST.

When the IG switch 42 is then turned ON, the initialization/initial diagnosis is performed (step S1), and then it is determined whether or not the above-described stage writing completion flag is 1 (step S401). When SF=1 in the step S401, since the temperature stage at the time of termination of the previous control processing stored in the storage section is reliable, the temperature stage ST is read (step S201), and on the basis of the temperature stage ST, the initial value of the motor temperature estimate is set (step S202).

When SF is not 1 (that is, SF=0) in the step S401, meanwhile, it means that motor control aborted at the time of end of the previous control processing. In this case, since control processing has been performed immediately before this-time starting, and the motor 20 may be at high temperature, the temperature stage ST is set to be 0 at the maximum temperature (step S402), and the state of the maximum temperature on the basis of ST=0 is set to be the initial value of the motor temperature estimate in the processing of the step S202.

When it is determined that the assist continuation condition has been fulfilled in the step S301, the temperature stage ST is set to be 0, which is on the safety side, in preparation for the next stopping of the control processing (step S203), and the stage writing completion flag SF is cleared to be 0 (step S403). Motor drive control is then performed as is the case with the third embodiment, and when the assist continuation condition is not fulfilled in the step S302, the motor drive control is stopped (step S12), and the temperature stage ST writing completion flag SF=1 is stored (step S404). Since the processing after the step S404 is the same as that described in the third embodiment, its description will be omitted here.

As described above, in the electric power steering apparatus in accordance with the fourth embodiment, when compared to the above-described third embodiment, the completion flag SF indicating whether or not the writing of the temperature stage ST has been completed is added, and the stage writing completion flag SF is stored in a different area from the area for the temperature stage ST in the storage section of the control unit 40. This achieves the same effect as the above-described first to third embodiments, and in addition, the motor 20 is prevented from being abnormally overheated even when an abnormal event such as momentary stop of the voltage of the battery 41 to cause resetting of the temperature estimate or faulty writing of the temperature stage ST.

Although embodiments of the present invention have been described specifically, the present invention is not limited thereto, and appropriate alterations may be made without departing from the concept thereof.

Although the present embodiments gave description with the motor 20 as an object for temperature estimation, the object for temperature estimation of the present invention is not limited to the motor 20, and may be a relay or other heating parts.

The present invention can be applied not only to column type and pinion type electric power steering apparatuses, but also to rack-assist type electric power steering apparatuses.

Since the electric power steering apparatus in accordance with the present invention can self-hold power even after power is turned off and can continue temperature estimation, it is useful for preventing a heating part such as a motor from becoming an overheated state.

Further embodiments as follows:
E1. An electric power steering apparatus provided with a motor (20) for providing a steering mechanisms (2) with steering assist force and a control unit (40) for controlling the drive current of said motor (20), wherein said control unit (40) comprises:
   a power self-holding means which can control own power off after power is turned on by an IG switch (42);
   a temperature estimation means for estimating the temperature of a heating part and performing temperature control by the temperature estimate;
   a temperature estimation status storage means for storing predetermined data indicating the status of temperature estimation processing before said temperature estimation means stops in a storage section within said control unit (40); and
   an initial value setting means for setting an initial value of said temperature estimate on the basis of said predetermined data when said IG switch (42) is turned ON again and said temperature estimation means is activated.
E2. The electric power steering apparatus according to embodiment E1, wherein said heating part is said motor (20).
E3. The electric power steering apparatus according to embodiment E1 or E2, wherein said temperature estimation status storage means is a temperature estimation processing completion flag storage means for storing a completion flag indicating that said temperature estimation processing has ended properly when said temperature estimate has become a predetermined value or less in said storage section when said IG switch (42) is turned OFF and said temperature estimation processing continues by said power self-holding means, and wherein
   said initial value setting means, when said IG switch (42) is turned ON again and said temperature estimation means is activated, checks the presence or absence of said temperature estimation processing completion flag, and when said temperature estimation processing completion flag is absent, reads a preset quantity of state and sets the initial value of said temperature estimate.
E4. The electric power steering apparatus according to embodiment E3, wherein said control unit (40) is provided with a temperature sensor (46) arranged around a control drive circuit, and wherein
   said initial value setting means sets the initial value of said temperature estimate out of a plurality of preset data on the basis of the initial detection value of said temperature sensor (46).
E5. The electric power steering apparatus according to embodiment E1 or E2, wherein said temperature estimation status storage means stores a temperature stage to which said temperature estimate belongs in said storage section when said IG switch (42) is turned OFF and said temperature estimation processing continues by said power self-holing means, and wherein
   said initial value setting means sets the initial value of said temperature estimate out of a plurality of preset data on the basis of said temperature stage when said IG switch (42) is turned ON again and said temperature estimation means is activated.
E6. The electric power steering apparatus according to embodiment E5, wherein said temperature stage storage means stores said temperature stage in said storage section until said temperature estimate becomes a predetermined value or less.
E7. The electric power steering apparatus according to embodiment E1 or E2, wherein said temperature estimation status storage means stores a temperature stage to which said temperature estimate belongs in said storage section when steering assist by said motor (20) ends and said temperature estimation processing by said power self-holding means continues, and wherein said initial value setting means sets the initial value of said temperature estimate out of a plurality of preset data on the basis of said temperature stage when said IG switch (42) is turned ON again and said temperature estimation means is activated.
E8. The electric power steering apparatus according to embodiment E7, wherein said temperature stage storage means stores said temperature stage in said storage section until said IG switch (42) is turned OFF.
E9. The electric power steering apparatus according to embodiment E7, wherein said temperature stage storage means stores said temperature stage in said storage section until said temperature stage reaches a predetermined stage.
E10. The electric power steering apparatus according to embodiment E7, wherein said temperature stage storage means stores said temperature stage in said storage section when said IG switch (42) is turned OFF and until said temperature stage reaches a predetermined stage.
E11. The electric power steering apparatus according to any one of embodiments E5 to E10, wherein said temperature stage storage means overwrites the present temperature stage in said storage section each time said temperature stage proceeds.
E12. The electric power steering apparatus according to any one of embodiments E5 to E11, wherein said control unit further comprises a stage writing completion flag storage means for storing a completion flag indicating that said temperature stage has been stored properly in a different area from the area for said temperature stage in said storage section, and wherein
   said initial value setting means, when said IG switch (42) is turned ON again and said temperature estimation means is activated, checks the presence or absence of said stage writing completion flag, and when said stage writing completion flag is absent, sets said temperature stage to be a temperature stage with the maximum quantity of stage out of a plurality of preset temperature stages, and on the basis of said temperature stage with the maximum quantity of stage, sets the initial value of said temperature estimate.

## Claims

1. An electric power steering apparatus comprising a motor (20) for providing a steering mechanism with steering assist force and a control unit (40) for controlling the drive current of said motor (20),
whereby said control unit (40) comprises:
a power self-holding means which can control own power off after power is once turned on by an IG switch (42);
a temperature estimation means for estimating a temperature of said motor (20) and performing a temperature control by the estimated temperature;
a temperature estimation status storage means, in a case that a temperature estimation processing continues by said power self-holding means, for storing predetermined data indicating a status of said temperature estimation processing in a storage section within said control unit (40) before said temperature estimation means stops; and
an initial value setting means, when said IG switch (42) is turned ON again and said temperature estimation means is activated, for setting an initial value of said estimated temperature based on said predetermined data indicating said status of said temperature estimation processing and a predetermined motor temperature estimation offset value, characteized by :
said temperature estimation status storage means is a temperature stage storage means for storing a temperature stage (ST) to which said estimated temperature belongs in said storage section until said IG switch (42) is turned OFF and said temperature stage (ST) reaches a predetermined stage when a steering assist by said motor (20) ends and said temperature estimation processing continues by said power self-holding means,
said initial value setting means reads out said motor temperature estimation offset value out of plural preset data and sets the initial value of said estimated temperature based on said temperature stage (ST) when said IG switch (42) is turned ON again and said temperature estimation means is activated, and
said temperature stage storage means stores said temperature stage (ST) in said storage section until said estimated temperature becomes a predetermined value or less, and also overwrites the present temperature stage in said storage section each time said temperature stage (ST) proceeds in a duration from at a time that said steering assist by said motor (20) ends to at a time that said temperature estimation means stops.

2. The electric power steering apparatus according to Claim 1, wherein:
said control unit (40) further comprises a stage writing completion flag storage means for storing a stage writing completion flag (SF) indicating that said temperature stage (ST) has been stored properly in a different area from the area for said temperature stage (ST) in said storage section, and
said initial value setting means, when said IG switch (42) is turned ON again and said temperature estimation means is activated, checks presence or absence of said stage writing completion flag (SF), and when said stage writing completion flag (SF) is absent, sets said temperature stage (ST) to be a temperature stage with a maximum stage amount out of plural preset temperature stages (ST), and based on said temperature stage (ST) with said maximum stage amount, sets the initial value of said estimated temperature.

## Patentansprüche

1. Elektrische Servolenkvorrichtung, die einen Motor (20) zum Bereitstellen eines Lenkmechanismus mit einer Lenkunterstützungskraft und eine Steuerungseinheit (40) zum Steuern des Antriebsstroms des Motors (20) umfasst, wobei die Steuerungseinheit (40) umfasst:
eine Leistungs-Selbsthalteeinrichtung, die eine eigene Leistungsabschaltung steuern kann, nachdem die Leistung einmal mittels eines Zündschalters (42) eingeschaltet wurde;
eine Temperaturschätzeinrichtung zum Schätzen einer Temperatur des Motors (20) und zum Durchführen einer Temperatursteuerung mittels einer geschätzten Temperatur;
eine Temperaturschätzungsstatus-Speichereinrichtung, in einem Fall, dass eine Temperaturschätzungs-Verarbeitung durch die Leistungs-Selbsthalteeinrichtung fortgesetzt wird, zum Speichern von vorbestimmten Daten, die einen Status der Temperaturschätzungs-Verarbeitung in einem Speicherabschnitt innerhalb der Steuerungseinheit (40) angeben, bevor die Temperaturschätzeinrichtung anhält; und
eine Anfangswert-Einstellungseinrichtung, wenn der Zündschalter (42) wieder eingeschaltet wird und die Temperaturschätzeinrichtung aktiviert wird, zum Einstellen eines Anfangswerts der geschätzten Temperatur auf Basis der vorbestimmten Daten, die den Status der Temperaturschätzungs-Verarbeitung angeben, und eines vorbestimmten Motortemperaturschätzungs-Offsetwerts, **dadurch gekennzeichnet, dass**:
die Temperaturschätzungsstatus-Speichereinrichtung eine Temperaturstufen-Speichereinrichtung zum Speichern einer Temperaturstufe (ST) ist, zu welcher die geschätzte Temperatur in dem Speicherabschnitt gehört, bis der Zündschalter (42) ausgeschaltet wird und die Temperaturstufe (ST) eine vorbestimmte Stufe erreicht, wenn eine Lenkhilfe durch den Motor (20) endet und die Temperaturschätzungs-Verarbeitung durch die Leistungs-Selbsthalteeinrichtung fortgesetzt wird,
die Anfangswert-Einstellungseinrichtung den Motortemperaturschätzungs-Verschiebungswert aus einer Vielzahl von voreingestellten Daten liest und den Anfangswert der geschätzten Temperatur auf Basis der Temperaturstufe (ST) einstellt, wenn der Zündschalter (42) wieder eingeschaltet wird und die Temperaturschätzeinrichtung aktiviert wird, und
die Temperaturstufen-Speichereinrichtung die Temperaturstufe (ST) im Speicherabschnitt speichert, bis die geschätzte Temperatur einen vorbestimmten Wert oder weniger annimmt, und sie auch die vorliegende Temperaturstufe im Speicherabschnitt jedes Mal überschreibt, wenn die Temperaturstufe (ST) in einer Dauer von einer Zeit, die die Lenkhilfe durch den Motor (20) endet, bis zu einer Zeit, die die Temperaturschätzeinrichtung anhält, fortfährt.

2. Elektrische Servolenkvorrichtung nach Anspruch 1, wobei:
die Steuerungseinheit (40) ferner eine Speichereinrichtung für eine Stufenschreib-Abschlussflag zum Speichern einer Stufenschreib-Abschlussflag (SF) umfasst, die angibt, dass die Temperaturstufe (ST) korrekt in einem Bereich gespeichert wurde, der von dem Bereich für die Temperaturstufe (ST) im Speicherabschnitt verschieden ist, und
die Anfangswert-Einstellungseinrichtung, wenn der Zündschalter (42) wieder eingeschaltet wird, und die Temperaturschätzeinrichtung aktiviert wird, die Anwesenheit oder Abwesenheit der Stufenschreib-Abschlussflag (SF) prüft, und wenn die Stufenschreib-Abschlussflag (SF) abwesend ist, die Temperaturstufe (ST) so einstellt, dass sie eine Temperaturstufe mit einem maximalen Stufenwert aus mehreren voreingestellten Temperaturstufen (ST) ist, und auf Basis der Temperaturstufe (ST) mit dem maximalen Stufenwert den Anfangswert der geschätzten Temperatur einstellt.

## Revendications

1. Appareil de direction assistée électrique comprenant un moteur (20) pour fournir à un mécanisme de direction une force d'assistance à la direction et une unité de commande (40) pour commander le courant d'attaque dudit moteur (20),
de sorte que ladite unité de commande (40) comprend :
un moyen d'auto-alimentation électrique qui peut commander son propre arrêt après l'activation de l'alimentation par un commutateur d'allumage (42) ;
un moyen d'estimation de température pour estimer une température dudit moteur (20) et pour effectuer une commande de température avec la température estimée ;
un moyen de stockage d'état d'estimation de température, dans le cas où un traitement d'estimation de température se poursuit par ledit moyen d'auto-alimentation électrique, pour stocker des données prédéterminées indiquant un état dudit traitement d'estimation de température dans une section de stockage à l'intérieur de ladite unité de commande (40) avant que ledit moyen d'estimation de température ne s'arrête; et
un moyen de réglage de valeur initiale, lorsque ledit commutateur d'allumage (42) est à nouveau mis sous tension et que ledit moyen d'estimation de température est activé, pour régler une valeur initiale de ladite température estimée sur la base desdites données prédéterminées indiquant ledit état dudit traitement d'estimation de température et une valeur de décalage d'estimation de température de moteur prédéterminée, **caractérisé par** :
ledit moyen de stockage d'état d'estimation de température est un moyen de stockage de niveau de température pour stocker un niveau de température (ST) auquel ladite température estimée appartient dans ladite section de stockage jusqu'à ce que ledit commutateur d'allumage (42) soit mis hors tension et ledit niveau de température (ST) atteint un niveau prédéterminé lorsqu'une assistance de direction par ledit moteur (20) se termine et ledit traitement d'estimation de température se poursuit par ledit moyen d'auto-alimentation électrique,
ledit moyen de réglage de valeur initiale lit ladite valeur de décalage d'estimation de température de moteur parmi plusieurs données préréglées et règle la valeur initiale de ladite température estimée sur la base dudit niveau de température (ST) lorsque ledit commutateur d'allumage (42) est à nouveau mis sous tension et que ledit moyen d'estimation de température est activé, et
ledit moyen de stockage de niveau de température stocke ledit niveau de température (ST) dans ladite section de stockage jusqu'à ce que ladite température estimée devienne une valeur prédéterminée ou moins, et écrase également le niveau de température en cours dans ladite section de stockage chaque fois que ledit niveau de température (ST) se poursuit pendant une durée à partir d'un instant où ladite assistance de direction par ledit moteur (20) se termine jusqu'à un instant où ledit moyen d'estimation de température s'arrête.

2. Appareil de direction assistée électrique selon la revendication 1, dans lequel :
ladite unité de commande (40) comprend en outre un moyen de stockage d'un drapeau d'achèvement d'écriture de niveau servant à stocker un drapeau d'achèvement d'écriture de niveau (SF) indiquant que ledit niveau de température (ST) a été stocké correctement dans une zone différente de la zone pour ledit niveau de température (ST) dans ladite section de stockage, et
ledit moyen de réglage de valeur initiale, lorsque ledit commutateur d'allumage (42) est à nouveau mis sous tension et que ledit moyen d'estimation de température est activé, vérifie la présence ou l'absence dudit drapeau d'achèvement d'écriture de niveau (SF), et lorsque ledit drapeau d'achèvement d'écriture de niveau (SF) est absent, règle ledit niveau de température (ST) comme étant un niveau de température avec une quantité de niveau maximal à partir de plusieurs niveaux de température préréglés (ST), et sur la base dudit niveau de température (ST) avec ladite quantité de niveau maximal, règle la valeur initiale de ladite température estimée.
